# EUROPÄISCHE PATENTANMELDUNG

(11) **EP 0 875 420 A2**
(43) Veröffentlichungstag der Anmeldung: **04.11.1998**
(21) Anmeldenummer: 98102720.4
(22) Anmeldetag: 17.02.1998
(51) Int. Cl.: B60N 3/02

(54) **Haltegriff in einem Kraftfahrzeug**

(30) Priorität: 29.04.1997 DE 29707759 U
(71) Anmelder: R. SCHMIDT GMBH, 57368 Lennestadt (DE)
(72) Erfinder: Schmidt,Reinhard, 57368 Lennestadt (DE)
(74) Vertreter: Nöth, Heinz, Dipl.-Phys.

(57) **Zusammenfassung**

Die Erfindung betrifft einen Haltegriff in einem Kraftfahrzeug mit einem Griffteil 2, das um eine Schwenkachse 7 aus einer Ruhelage von Hand schwenkbar ist und durch Federkraft in die Ruhelage zurückbewegbar ist, und mit einer Dämpfungseinrichtung 12, die ein mit dem Griffteil 2 verschwenkbares Teil aufweist, auf das bei der Rückbewegung eine Bremskraft ausgeübt wird, wobei die Dämpfungseinrichtung 12 als verschwenkbares Teil einen konisch geformten Kolben 20 aufweist, der in einem Gehäuse 13 mit an die Kolbenform angepaßtem Innenkonus 14 drehbar angeordnet ist, und wobei der Kolben 20 und das Gehäuse 13 gegeneinander vorgespannt sind.

## Beschreibung

Die Erfindung betrifft einen Haltegriff in einem Kraftfahrzeug mit einem Griffteil, das um eine Schwenkachse aus einer Ruhelage von Hand schwenkbar ist und durch Federkraft in die Ruhelage zurückbewegbar ist, und mit einer Dämpfungseinrichtung, die ein um die Schwenkachse drehbares Teil aufweist, auf das bei der Rückbewegung eine Bremskraft ausgeübt wird.

Solche Haltegriffe sind als Klappgriffe bekannt, die beispielsweise in Fahrzeugen insbesondere seitlich im Bereich des Dachhimmels angebracht sind. Die Dämpfungseinrichtung bewirkt, daß das Griffteil, nachdem es herabgeklappt und danach losgelassen worden ist, bei seiner durch eine Federkraft bewirkten Rückbewegung nicht beschleunigt gegen eine Fahrzeuginnenwand oder den Dachhimmel schlägt und dabei ein störendes Geräusch erzeugt, sondern daß diese Rückbewegung vielmehr gebremst erfolgt, so daß ein störendes Geräusch durch ein weiches Anlegen des Griffteils an dem Fahrzeug weitgehend vermieden wird.

Aus der DE 296 04 260 U1 ist ein Klappgriff mit einem Griffbügel bekannt, der an seinem einen Lagerbock eine Drehfeder zum Erzeugen einer Rückstellkraft und an seinem anderen Lagerbock eine Bremseinrichtung zur Dämpfung der Rückstellbewegung aufweist. Die Bremseinrichtung weist ein Gehäuse mit einem darin drehbaren Drehkolben auf. Das mit dem Griffbügel gekoppelte Gehäuse ist zylindrisch und weist einen sacklochförmigen Ringraum auf, in den der Drehkolben mit einem ringzylindrischen Abschnitt eintaucht, wobei zwei Ringspalten gebildet sind, die mit einem viskosen Material wie Siliconöl/-fett gefüllt sind. Die Brems- oder Dämpfwirkung wird ausschließlich über das viskose Material erzielt.

Aufgabe der vorliegenden Erfindung ist es, einen gattungsgemäßen Haltegriff zu schaffen, der einfach aufgebaut ist und eine sichere Bremsung oder Dämpfung der Rückstellbewegung des Haltegriffes ermöglicht.

Diese Aufgabe wird durch einen Haltegriff mit den Merkmalen des Anspruchs 1 gelöst. Vorteilhafte Ausgestaltungen der Erfindung sind in den Unteransprüchen angegeben.

Durch den konisch geformten Kolben und den zugeordneten Innenkonus kann schon durch eine geringe axiale Vorspannung eine ausreichende Reibungskraft zwischen den konischen Flächen bei einer Verdrehung des Kolbens in dem Gehäuse erzielt werden, die auch fein dosierbar eingestellt und nachgestellt werden kann. Die erzeugbare Reibungskraft ist sehr gleichmäßig, da sich der Kolben durch die Konusform in dem Gehäuse selbst zentriert. Ferner erfordern kegelige oder konische Flächen geringere Fertigungsgenauigkeit. Die Reibungskraft kann durch Wahl der Materialpaarung sowie der Oberflächengüte beeinflußt werden.

In einer vorteilhaften Ausgestaltung ist zwischen den konischen Flächen des Kolbens und des Innenkonus des Gehäuses ein viskoses Material enthalten, beispielsweise eine hochviskose Flüssigkeit wie Siliconöl. Die Berührungsflächen gleiten dann im Mischreibungsbereich aufeinander, d. h. es liegt sowohl Festkörperreibung als auch Schmierreibung durch die viskose Flüssigkeit vor. Der Anteil der Festkörperreibung erhöht sich mit zunehmender axialer Vorspannung des Kolbens in dem Gehäuse.

In dem Schmierspalt wird das viskose Material normalerweise aufgrund von Kapillarkräften zurückgehalten. Zusätzlich kann jedoch noch eine Abdichtung z. B. in Form eines O-Ringes vorgesehen sein, die jeglichen Austritt von viskosem Material sicher verhindert.

Nachfolgend wird die Erfindung anhand von Ausführungsbeispielen unter Bezugnahme auf Zeichnungen näher erläutert. Es zeigt:

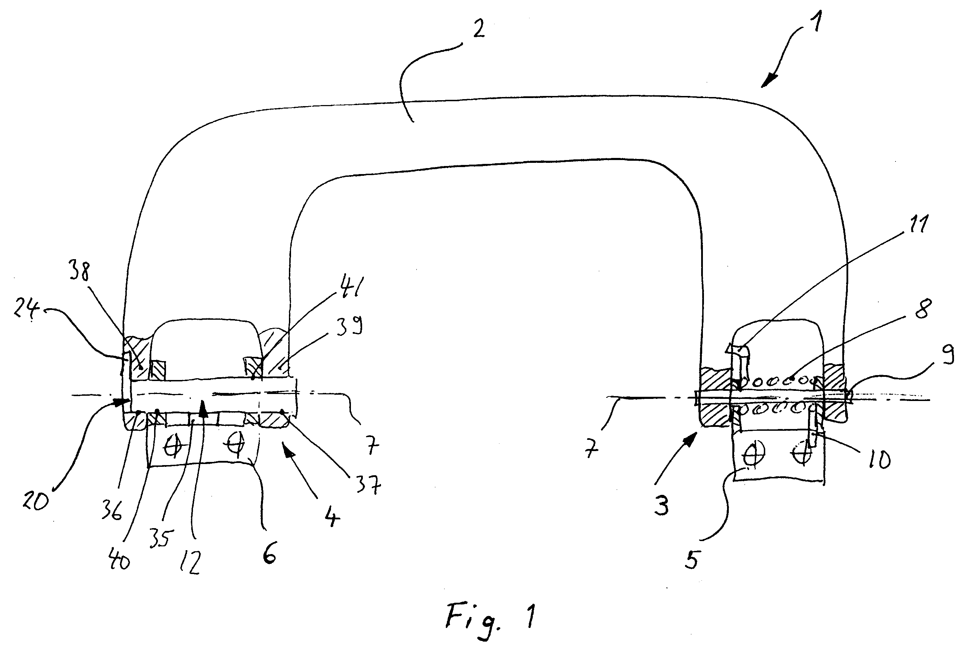

- Fig. 1: in einer Draufsicht einen erfindungsgemäßen Haltegriff;
- Fig. 2: in einer Schnittansicht eine Dämpfungseinrichtung des Haltegriffs;
- Fig. 3: in einer Seitenansicht die in Fig. 2 dargestellte Dämpfungseinrichtung; und
- Fig. 4: in einer Schnittansicht ein weiteres Ausführungsbeispiel einer erfindungsgemäßen Dämpfungseinrichtung des Haltegriffs.

Ein erfindungsgemäßer Haltegriff 1 enthält ein Griffteil 2, das an seinen beiden Griffteilenden 3, 4 an jeweiligen Lagerböcken 5, 6, die im Inneren eines Kraftfahrzeugs am Fahrzeugaufbau befestigt sind, um eine Schwenkachse 7 schwenkbar gelagert ist. Das Griffteil 2 kann aus seiner Ruhelage von Hand um die Schwenkachse 7 in eine Funktionsstellung geschwenkt werden. Eine Rückstellfeder 8 befindet sich an dem Lagerbock 5 des ersten Griffteilendes 3. Sie ist beispielsweise als Schraubenfeder ausgebildet, die um einen die Schwenkachse 7 bildenden Lagerbolzen 9 angeordnet ist und deren eines Ende 10 sich am Lagerbock 5 oder dem Fahrzeugaufbau und deren anderes Ende 11 sich am Griffteilende 3 abstützt. Die Rückstellfeder 8 schwenkt das Griffteil 2 aus der Funktionsstellung zurück in die Ruhestellung.

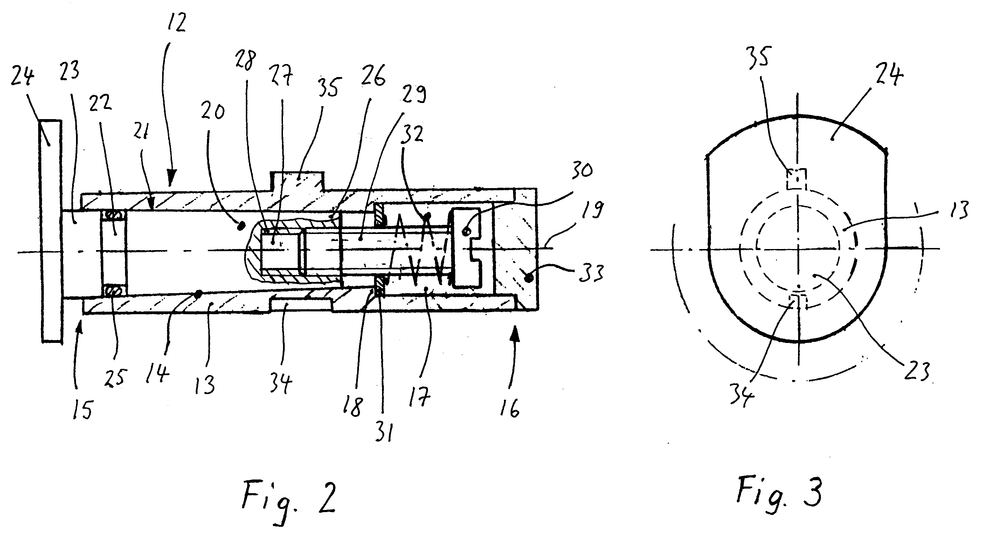

An dem anderen Griffteilende 4 befindet sich eine Dämpfungseinrichtung 12, die ein bremsendes Moment auf das Griffteil 2 während seiner von der Rückstellfeder 8 bewirkten Rückstellbewegung ausübt und dadurch eine gebremste oder gedämpfte Rückstellbewegung des Griffteils 2 in die Ruhestellung erreicht. Die Dämpfungseinrichtung 12 weist ein Gehäuse 13 mit einem zentralen inneren Kegelabschnitt oder Innenkonus 14 auf, der sich zu einem gemäß Fig. 2 linken Ende 15 des Gehäuses 13 öffnet. Die Steigung des Kegelabschnittes bzw. des Innenkonus 14 beträgt beispielsweise 1:20. An den Innenkonus 14 schließt sich in Richtung zum gegenüberliegenden rechten Ende 16 eine Bohrung 17 an, wobei im Übergang ein Absatz 18 gebildet ist. Das Gehäuse 13 hat einen zu seiner Längsachse 19 beispielsweise symmetrischen runden Umfang, kann aber auch eine davon abweichende Außenform aufweisen.

Die Dämpfungseinrichtung 12 weist desweiteren einen in dem Gehäuse 13 angeordneten Kolben 20 auf, der mit seiner konischen oder kegelabschnittsförmigen Umfangsfläche 21, deren Kegelsteigung mit derjenigen des Innenkonus 14 übereinstimmt, an dem Innenkonus 14 des Gehäuses 13 anliegt. An den Konusabschnitt schließt sich eine Ringnut 22 und anschließend ein Schaftabschnitt 23 an, an dem ein Hebelteil 24 zum Übertragen eines Drehmoments angeformt oder befestigt ist, das z. B. als Scheibe mit einem radial erweiterten Bereich geformt ist. In der Ringnut 22 ist ein O-Ring 25 eingesetzt. An dem im Gehäuseinneren liegenden Endabschnitt 26 des Kolbens 20 ist eine axiale Bohrung 27 mit einem Innengewinde 28 vorgesehen, in dem eine Zylinderkopfschraube 29 eingeschraubt ist. Zwischen dem Schraubenkopf 30 und einer Ringscheibe 31, die in der Bohrung 17 an dem Absatz 18 angelegt ist, ist eine Schraubendruckfeder 32 eingespannt. Das rechte offene Ende 16 des Gehäuses 13 ist durch eine eingesetzte oder eingepreßte Abdeckkappe 33 verschlossen. Der Außenumfang des Gehäuses 13 ist zylindrisch und weist zumindest eine Ausformung auf, die das Gehäuse 13 gegen Verdrehen sichern kann und als axiale Nut 34 oder als hervorstehende axiale Rippe 35 ausgebildet ist.

Zwischen den aufeinanderliegenden Kegelflächen des Gehäuses 13 und des Kolbens 20 kann ein viskoses Material wie z. B. ein Siliconöl oder Siliconfett oder dergleichen enthalten sein. Zusätzlich kann in dem Bohrungsraum 17 dieses viskose Material enthalten sein, so daß ein Vorratsdepot gebildet ist.

Die Dämpfungseinrichtung 12 wird bei der Montage an dem Griffteilende 4 beispielsweise durch zwei Bohrungen 36, 37 in zwei beabstandeten Griffteilzungen 38 bzw. 39 sowie durch zwei dazwischenliegende deckungsgleiche Bohrungen 40, 41 des Lagerbocks 6 gesteckt und bildet somit die Lager- oder Schwenkachse 7. Das Gehäuse 13 ist über die Rippe 35 an dem Lagerbock 6 gegen Verdrehen gesichert. Das Griffteil 2 ist somit auf dem Umfang des Gehäuses 13 gegenüber diesem schwenkbar gelagert. Das Hebelteil 24 ist seitlich in eine an seine Form angepaßte Ausnehmung am Griffteil 2 eingefügt und überträgt somit durch Formschluß eine Schwenkbewegung des Griffteils 2 auf den Kolben 20.

Wenn das von Hand herabgeschwenkte Griffteil 2 losgelassen wird, wird es durch die Rückstellfeder 8 wieder in seine Ruhestellung zurückbewegt. Die Drehbewegung des in den Innenkonus 14 vorgespannten Kolbens 20 wird dabei durch die Reibung zwischen den beiden konischen Umfangsflächen gebremst, sodaß das Griffteil 2 mit verlangsamter Geschwindigkeit gedämpft auf die Fahrzeuginnenwand im Bereich des Haltegriffs oder auf die Lagerböcke auftrifft. Durch Verdrehen der Zylinderkopfschraube 29 kann die Feder 32 und somit die Vorspannung des Kolbens 20 in dem Innenkonus 14 und folglich die Reibkraft eingestellt werden.

Durch Verwendung eines viskosen Materials zwischen den konischen Flächen wird das Reib- und Bewegungsverhalten verbessert, wobei dann die Federvorspannkraft erhöht werden kann. Die Abdichtung mit dem O-Ring verhindert sowohl das Eindringen von Verunreinigungen, die die Reibflächen beeinträchtigen könnten, als auch den Austritt von viskosem Material.

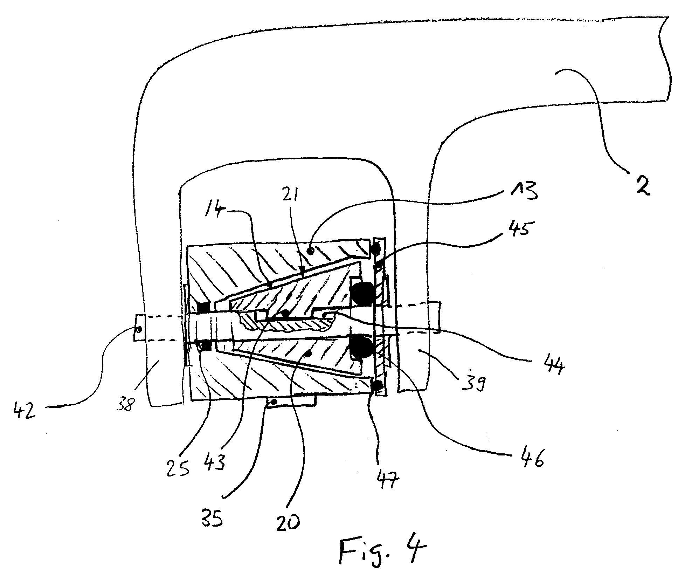

Ein weiteres Ausführungsbeispiel der Erfindung mit abgewandelter Dämpfungseinrichtung ist in Fig. 4 dargestellt, wobei dem vorangegangenen Ausführungsbeispiel entsprechende Teile mit denselben Bezugszeichen bezeichnet sind. Auf einer durch die beiden Bohrungen 36, 37 in den zwei Griffteilzungen 38 bzw. 39 gesteckten Steckachse 42, die eine Lager- oder Schwenkachse 7 bildet, ist das Gehäuse 13 drehbar, jedoch axial festgelegt angeordnet. In seinem zentralen Innenkonus 14 ist der Kolben 20 mit entsprechender konischer Umfangsfläche 21 angeordnet, der auf der Steckachse 42 axial verschiebbar gelagert ist und über eine Mitnahme 43 gegen Verdrehung bezüglich der Steckachse 42 gesichert ist. Als Mitnahme 43 eignet sich ein in eine axiale Nut 44 der Steckachse 42 hervorstehender Vorsprung oder Zapfen oder ein formschlüssiges Mehrkant- oder Vielkeilprofil oder dergleichen zwischen dem Kolben 20 und der Steckachse 42. Das offene Ende des Gehäuses 13 ist durch eine Abdeckkappe 45 verschlossen. Zwischen der Abdeckkappe 45 und der Stirnseite des Kolbens 20 ist ein federelastisches Element 46, beispielsweise ein O-Ring oder dergleichen, zum Erzeugen einer axialen Vorspannkraft angeordnet. Die Abdeckkappe 45 ist auf der Steckachse 42 angebracht und kann axial geringfügig verstellbar sein, beispielsweise durch eine Gewindelagerung der Abdeckklappe 45 auf der Steckachse 42, so daß die Vorspannkraft des O-Ringes 46 einstellbar ist. Ein O-Ring 47 ist zur Abdichtung zwischen der Abdeckkappe 45 und dem Gehäuse 13 eingesetzt. Ein O-Ring 25 dichtet das Gehäuse 13 an seiner Lagerung auf der Steckachse 42 ab. Das Gehäuse 13 ist gegen Verdrehen z. B. durch eine vorstehende Rippe 35 oder dergleichen gesichert, die sich beispielsweise an einem Lagerbock (nicht dargestellt) abstützen kann.

## Patentansprüche

1. Haltegriff in einem Kraftfahrzeug mit einem Griffteil, das um eine Schwenkachse aus einer Ruhelage von Hand schwenkbar ist und durch Federkraft in die Ruhelage zurückbewegbar ist, und mit einer Dämpfungseinrichtung, die ein mit dem Griffteil verschwenkbares Teil aufweist, auf das bei der Rückbewegung eine Bremskraft ausgeübt wird,
**dadurch gekennzeichnet,**
daß die Dämpfungseinrichtung (12) als verschwenkbares Teil einen konisch geformten Kolben (20) aufweist, der in einem Gehäuse (13) mit an die Kolbenform angepaßtem Innenkonus (14) drehbar angeordnet ist, und daß der Kolben (20) und das Gehäuse (13) gegeneinander vorgespannt sind.

2. Haltegriff nach Anspruch 1, dadurch gekennzeichnet, daß der Kolben (20) und das Gehäuse (13) durch eine Feder (32) oder durch einen O-Ring (46) in Axialrichtung gegeneinander vorgespannt sind.

3. Haltegriff nach Anspruch 1 oder 2, dadurch gekennzeichnet, daß sich ein viskoses Material zwischen dem Kolben (20) und dem Gehäuse (13) befindet.

4. Haltegriff nach einem der Ansprüche 1 bis 3, dadurch gekennzeichnet, daß die Vorspannkraft der Feder (32) oder des O-Ringes (46) und damit die Reibkraft/Dämpfungskraft der Dämpfungseinrichtung (12) einstellbar ist.

5. Haltegriff nach einem der Ansprüche 1 bis 4, dadurch gekennzeichnet, daß das Gehäuse (13) eine Lagerachse (7) des Griffteils (2) in einem Grifflagerbock (6) bildet.

6. Haltegriff nach einem der Ansprüche 3 bis 5, dadurch gekennzeichnet, daß eine Abdichtung (25, 33) den Austritt von viskosem Material aus dem Gehäuse (13) verhindert.

7. Haltegriff nach einem der Ansprüche 3 bis 6, dadurch gekennzeichnet, daß in dem Gehäuse (13) ein Depot (17) für viskoses Material vorgesehen ist.

8. Haltegriff nach Anspruch 6 oder 7, dadurch gekennzeichnet, daß die Abdichtung einen O-Ring (25) und eine Gehäuseabschlußkappe (33) umfaßt.

9. Haltegriff nach einem der Ansprüche 2 bis 8, dadurch gekennzeichnet, daß die Feder (32) eine sich im Gehäuse (13) zwischen einem Absatz (18) und einer am Kolben (20) befestigten Einstellschraube (29) abstützende Schraubenfeder (32) ist.

10. Haltegriff nach Anspruch 9, dadurch gekennzeichnet, daß eine Ringscheibe (31) an dem Absatz (18) angeordnet ist, an der sich die Schraubenfeder (32) abstützt.

11. Haltegriff nach einem der Ansprüche 1 bis 10, dadurch gekennzeichnet, daß der Kolben (20) mittels eines Hebelteils (24) mit dem Griffteil (2) drehfest verbunden ist.

12. Haltegriff nach Anspruch 11, dadurch gekennzeichnet, daß das Hebelteil (24) mit dem Griffteil (2) formschlüssig verbunden ist.

13. Haltegriff nach einem der Ansprüche 1 bis 12, dadurch gekennzeichnet, daß das Gehäuse (13) an seinem Außenumfang eine axiale Rippe (35) und/oder eine axiale Nut (34) aufweist, durch die es in einem Lagerbock (6) für das Griffteil (2) gegen Rotation gesichert ist.

14. Haltegriff nach einem der Ansprüche 1 bis 13, dadurch gekennzeichnet, daß die Dämpfungseinrichtung (12) als Baugruppe mit ihrem Gehäuse (13) durch zwei Lagerbohrungen (36, 37) des Griffteils (2) und eine Aufnahme (40, 41) des Lagerbocks (6) gesteckt ist und der Kolben (20) mittels des Hebelteils (24) an dem Griffteil (2) befestigt ist.

15. Haltegriff nach einem der Ansprüche 1 bis 14, dadurch gekennzeichnet, daß das Gehäuse (13) einen zylindrischen Außenumfang aufweist.

16. Haltegriff nach einem der Ansprüche 1 bis 15, dadurch gekennzeichnet, daß die Dämpfungseinrichtung (12) an dem einen Lagerbock (6) angeordnet ist und eine die Rückstellkraft bereitstellende Feder (8) an dem anderen Lagerbock (5) vorgesehen ist.

17. Haltegriff nach einem der Ansprüche 1 bis 16, dadurch gekennzeichnet, daß der Kolben (20) auf einer mit dem Griffteil (2) fest verbundenen Steckachse (42) axial verschiebbar und durch eine Mitnahme (43) gegenüber der Steckachse (42) drehfest gelagert ist.

18. Haltegriff nach Anspruch 17, dadurch gekennzeichnet, daß die Mitnahme (43) von einem inneren Vorsprung am Kolben (20) gebildet ist, der sich in eine axiale Nut (44) an der Steckachse (42) erstreckt.

19. Haltegriff nach Anspruch 17, dadurch gekennzeichnet, daß die Mitnahme (43) von einem Formschlußprofil wie einer Vierkantkontur oder einem Vielkeilprofil gebildet ist.
